# EUROPÄISCHE PATENTANMELDUNG

(11) **EP 3 670 269 A1**
(43) Veröffentlichungstag der Anmeldung: **24.06.2020**
(21) Anmeldenummer: 18000993.8
(22) Anmeldetag: 21.12.2018
(51) Int. Cl.: B60R 9/045, B60R 9/052

(54) **MOTORISCH BETÄTIGBARER DACHTRÄGER**

(71) Anmelder: Kameraj, Shaban, 8180 Bülach (CH)
(72) Erfinder: Kameraj, Shaban, 8180 Bülach (CH)
(74) Vertreter: Laminger, Norbert

(57) **Zusammenfassung**

Die Erfindung betrifft eine tragende Baugruppe (1) eines Fahrzeuges, umfassend auf Biegung und/oder Schub belastete Bauteile, wobei zumindest zwei dieser Bauteile (2v, 2h, 3r, 3l) im Dachbereich (4) verlaufen. Zwei Träger (6v, 6h) einer Dachträgeranordnung sind an Schwenkhebeln (7) befestigt, welche um jeweils eine im Wesentlichen in der Ebene des Fahrzeugdaches liegende Achse (8v, 8h) verschwenkbar sind. Die Anlenkpunkte der Schwenkhebel (7) jeweils eines dieser Träger am Bauteil (2v, 2h, 3r, 3l) des Dachbereiches (4) liegen in Längsrichtung oder in Querrichtung des Fahrzeuges hintereinander und stehen mit einem reversierbaren, ansteuerbaren Antrieb (9) in Wirkverbindung.

## Beschreibung

Die Erfindung betrifft eine tragende Baugruppe eines Fahrzeuges, insbesondere einen Rahmen oder eine selbsttragende Karosserie eines Kraftfahrzeuges, umfassend auf Biegung und/oder Schub belastete Bauteile, wobei zumindest zwei dieser Bauteile im Dachbereich verlaufen, sowie weiters eine Fahrzeugkarosserie, bestehend aus einer derartigen tragenden Baugruppe und einer zumindest teilweise davon gebildeten oder daran befestigten Beplankung, welche eine äussere Oberfläche bildet.

In der US 6029873 A ist ein an der Dachplatte des Fahrzeuges montierter Dachgepäckträger offenbart, mit einem Paar seitlich voneinander beabstandeter Schienen und zumindest einem Querträger. Ein Paar von Kanälen in einer Dachplatte eines Kraftfahrzeugs ist um den gleichen Abstand wie die Schienen beabstandet. Ein Betätigungsmechanismus ist vorgesehen, um die Schienen aus einer angehobenen Gebrauchsstellung, die über die Dachplatte hinausragt, in eine zurückgezogene Stellung innerhalb der Kanäle zu bewegen. Die Schienen sind im eingefahrenen Zustand im Wesentlichen bündig mit der oberen Oberfläche der Dachplatte.

Es war die Aufgabe der vorliegenden Erfindung, einen Dachträger derart zu gestalten, dass er eine hohe Stabilität mit hohem Komfort im Fahrbetrieb vereint und Nachteile des Standes der Technik in dieser Hinsicht vermeidet.

Zur Lösung dieser Aufgabe ist erfindungsgemäss vorgesehen, dass zwei Träger einer Dachträgeranordnung an Schwenkhebeln befestigt sind, welche um jeweils eine im Wesentlichen in der Ebene des Fahrzeugdaches liegende Achse verschwenkbar sind, wobei die Anlenkpunkte der Schwenkhebel jeweils eines dieser Träger am Bauteil des Dachbereiches in Längsrichtung oder in Querrichtung des Fahrzeuges hintereinanderliegen und mit einem reversierbaren, ansteuerbaren Antrieb in Wirkverbindung stehen. Durch die direkte Anbindung des Dachträgers an den tragenden Aufbau des Fahrzeuges kann dessen Stabilität und Tragfähigkeit auch für die Dachträgeranordnung genutzt werden. Auch stellen die Verbindungsstellen zwischen Dachträgeranordnung und Fahrzeug keine die Belastbarkeit des Dachträgers begrenzenden Limitierungen dar, sondern weisen gegenüber herkömmlichen Konstruktionen deutlich höhere Stabilität und Belastbarkeit auf.

Bevorzugt ist der Antrieb ebenfalls an einem Bauteil des Dachbereiches angebracht, sodass auch durch die Anbindung des Antriebs keinerlei Schwächung der Dachträgeranordnung zu befürchten ist. Überdies ist damit eine optimale und möglichst spiel- und verlustfreie Kraftübertragung vom Antrieb auf die Dachträgeranordnung gewährleistet.

Eine besonders günstige und steuerungstechnisch einfache und verlässliche Ausführungsform der Erfindung sieht vor, dass die Schwenkhebel antriebsmässig mit der Abtriebsachse eines Elektromotors gekoppelt sind. Besonders stabil und mit geringen Verlusten behaftet ist eine optionale Variante, bei welcher die Schwenkhebel direkt mit dieser Achse drehfest verbunden sind.

Um die Sicherheit in Bedienung und bei der Benutzung der Dachträgeranordnung zu gewährleisten, steht gemäss einem optionalen weiteren Erfindungsmerkmal die Steuerung der Antriebe mit einer Sensoranordnung in Wirkverbindung und ist derart ausgelegt, dass im Fall der die Überschreitung eines Grenzwertes für die Geschwindigkeit und/oder das auf die Träger der Dachträgeranordnung einwirkende Gewicht die Antriebe blockiert sind. Diese Anordnung erfüllt die Funktion der Sicherheit der Ladung auf dem Dach, sowie die Vorbeugung technischer Defekte am Dachträger. Sobald die Sensoren ein Mindestgewicht (z.B.:0,5 kg) auf dem Dachträger erkennen, ist die Funktion Ein- bzw. Ausfahren deaktiviert. Das gleiche Verfahren gilt auf der Fahrt. Sobald sich das Fahrzeug nicht mehr im Stillstand befinden, wird die Funktion für das Einfahren bzw. Ausfahren der Dachträger deaktiviert.

Eine erste konstruktive Ausführungsform der Erfindung sieht vor, dass Querträger der Dachträgeranordnung an zwei auf gegenüberliegenden Fahrzeugseiten und in Längsrichtung des Fahrzeuges verlaufenden Bauteilen der Baugruppe befestigt sind.

Alternativ oder auch ergänzend dazu ist eine weitere Ausführungsform, gemäss welcher Längsschienen der Dachträgeranordnung an zwei in Bezug auf die Fahrzeuglängsachse hintereinanderliegenden und in Querrichtung des Fahrzeuges verlaufenden Bauteilen der Baugruppe befestigt sind.

Zur Lösung der eingangs gestellten Aufgabe ist auch eine Fahrzeugkarosserie vorgesehen, bestehend aus einer tragenden Baugruppe nach einem der vorhergehenden Absätze. Die Beplankung weist erfindungsgemäss Ausnehmungen zur Aufnahme der Träger der Dachträgeranordnung auf und die Träger sind derart geformt, dass deren Oberseite eine den Ausnehmungen korrespondierend geformt ist.

Nachfolgend soll ein Ausführungsbeispiel der Erfindung unter Bezugnahme auf die beigefügte Zeichnung näher erläutert werden. Die konkrete Form und Gestaltung der dargestellten Elemente ist nur als eines von vielen möglichen Beispielen zu sehen und ist daher nicht auf die gezeigte Form beschränkt. Die Erfindung ist nicht auf die speziell dargestellte Ausführungsvariante eingeschränkt, sondern umfasst auch Varianten, die im Können des auf diesem technischen Gebiet tätigen Fachmannes liegen.

Dabei zeigt die
Fig. 1 eine perspektivische Ansicht eines Rahmens für ein Kraftfahrzeug mit daran befestigter Dachträgeranordnung;
Fig. 2 eine schematische Seitenansicht eines Fahrzeuges mit einer erfindungsgemässen Konstruktion;
Fig. 3 eine schematische Draufsicht auf das Fahrzeug der Fig. 2; und
Fig. 4 ein Detail der Konstruktion im Bereich der Anbringung am Rahmen des Fahrzeuges in schematischer Darstellung, unter Einbeziehung wichtiger steuerungstechnischer Komponenten.

Die in den Zeichnungsfiguren dargestellten Details entsprechen nicht immer der tatsächlichen Grösse im Vergleich mit anderen dargestellten Bauteilen, sondern können der Klarheit der Darstellung halber relativ zu anderen Bauteilen grösser oder kleiner gezeichnet sein.

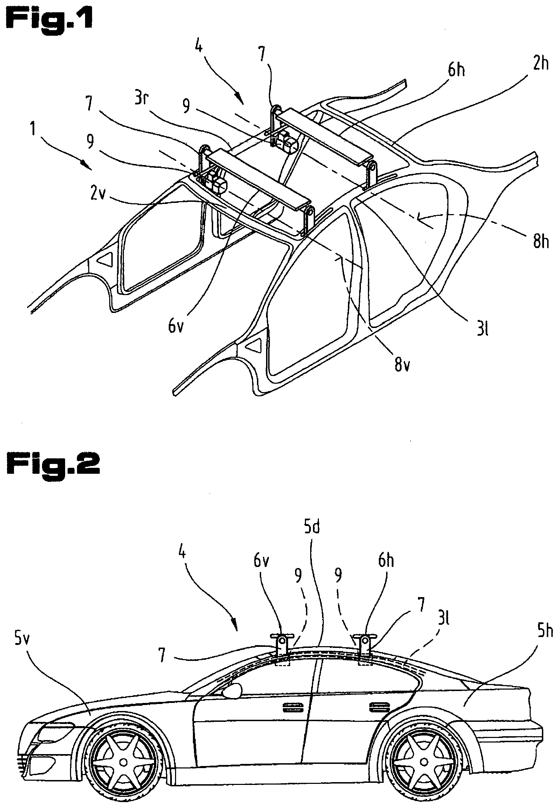

Fig. 1 zeigt als Beispiel für eine tragende Baugruppe eines Fahrzeuges einen Rahmen 1 für ein Kraftfahrzeug. Genauso gut könnte es sich um eine selbsttragende Karosserie, eine Monocoque-Struktur od.dgl. handeln. Der Rahmen 1 oder jede andere Struktur umfasst auf Biegung und/oder Schub belastete Bauteile, wobei zumindest zwei dieser Bauteile, eine vordere Querstrebe 2v und eine hintere Querstrebe 2h, eine linke Längstrebe 31 bzw. eine rechte Längsstrebe 3r, im Dachbereich 4 verlaufen. Um die Karosserie des Fahrzeuges zu bilden, sind - siehe dazu die Fig. 2 - am Rahmen 1 Bauteile zur Beplankung befestigt, beispielsweise Kotflügel 5v, 5h oder eine Dachplatte 5d. Allenfalls kann die Beplankung ein Teil der tragenden Baugruppe sein, insbesondere bei selbsttragenden Karosserien. Die Beplankung bildet die äussere Oberfläche des Fahrzeuges.

Am Rahmen 1 schwenkbar befestigt sind zwei Träger 6v, 6h einer Dachträgeranordnung, wozu diese Träger 6v, 6h an Schwenkhebeln 7 befestigt sind, welche um jeweils eine im Wesentlichen in der Ebene des Fahrzeugdaches 4 liegende Achse 8v, 8h verschwenkbar sind. In der in den Zeichnungsfiguren dargestellten Ausführungsform liegt diese Achse 8v, 8h quer zur Fahrzeuglängsrichtung und die Träger 6v, 6h sind die Querträger der Dachträgeranordnung. Die Anlenkpunkte der Schwenkhebel 7 der hintereinanderliegenden Träger 6v, 6h befinden sich an zwei auf gegenüberliegenden Fahrzeugseiten und in Längsrichtung des Fahrzeuges verlaufenden Längsträgern 31, 3r des Rahmens 1, und zwar jeweils am linken oder rechten Bauteil 31 bzw. 3r des Dachbereiches in Längsrichtung des Fahrzeuges hintereinander.

Denkbar wäre auch eine alternative Anordnung, bei welcher die Träger der Dachträgeranordnung als Längsschienen vorgesehen sind. Die Anlenkpunkte der Schwenkhebel 7 jeweils eines dieser Träger liegen dabei in Fahrzeuglängsrichtung nebeneinander. Anstelle an längs verlaufenden Bauteilen 31, 3r des Rahmens 1 könnten die Schwenkhebel 7 bei dieser Variante auch an zwei in Bezug auf die Fahrzeuglängsachse hintereinanderliegenden und in Querrichtung des Fahrzeuges verlaufenden Bauteilen 2v, 2h des Rahmens 1 befestigt sein. Auch eine Kombination beider Varianten ist möglich.

Die Dachträgeranordnung wird bevorzugt bereits ab Werk eingebaut, um sie betreffend Gestaltung und Anbringung optimal auf jedes Fahrzeugmodell abzustimmen. Die Träger 6v, 6h als Querträger sind vorzugsweise als Aluminiumprofil ausgeführt und bevorzugt aerodynamisch windstill konzipiert, um Fahrtgeräusche zu minimieren. Die Oberseite der Träger 6v, 6h, der allein in der eingefahrenen Stellung bei Draufsicht auf das Fahrzeugdach sichtbar ist, besteht vorzugsweise aus Hart-PVC, welches wetterbeständig, UV-beständig und ohne spitzige oder harte Kanten ausgeführt ist. Die Beplankung, d.h. hier speziell die Dachplatte 5d, des Rahmens 1 weist erfindungsgemäss Ausnehmungen 14 zur Aufnahme der Träger 6v, 6h der Dachträgeranordnung auf und die Träger sind derart geformt, dass deren Oberseite den Ausnehmungen 14 korrespondierend geformt ist.

Auch die übrige Formgebung kann beliebig gewählt werden. Das Hart-PVC schont die Verkratzung und Beschädigung von transportierten Metallgegenständen. Bei ausgefahrener Dachträgeranordnung wird die im Dach verbleibende Öffnung vorzugsweise durch eine Abdeckung - eingeschwenkt oder eingeschoben wie ein Schiebedach - verschlossen, welche Abdeckung vorteilhafterweise ebenfalls eine Aussenseite aus Hart-PVC mit den gleichen Eigenschaften wie oben beschrieben hat oder zur Gänze aus diesem Material besteht und auch als Dichtung für die Wärmeisolierung, Wetterschutz, Lärmschutz, etc. wirkt.

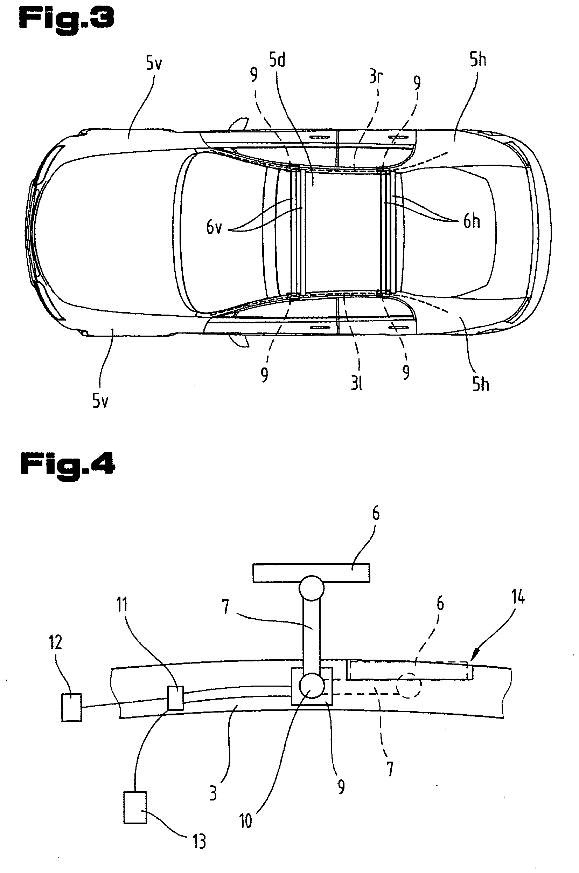

Jeder Schwenkhebel 7 steht mit jeweils einem zugehörigen reversierbaren, ansteuerbaren Antrieb 9 in Wirkverbindung, wobei dieser Antrieb 9 - in den Fig. 1 bis 3 im Vergleich mit den umgebenden Bauteilen vergrössert dargestellt, in Fig.4 im Wesentlichen in relativ zu den umgebenden Bauteilen korrekter Grösse gezeichnet - vorzugsweise ebenfalls an einem Bauteil des Dachbereiches des Rahmens 1 befestigt ist, vorzugsweise am gleichen Bauteil wie der Schwenkhebel. Die Antriebe 9 sind typischerweise lediglich so gross, dass sie ohne in den Fahrgastraum zu ragen eingebaut werden können und vorzugsweise ohne wesentlichen zusätzlichen Platzbedarf an oder in den umgebenden Bauteilen angebracht werden können. Vorzugsweise wird der Antrieb 9 als Elektromotor, beispielsweise als 12V-Motor, ausgeführt sein und ist dann der Schwenkhebel 7 vorzugsweise direkt drehfest auf dessen Abtriebswelle 10 befestigt. Denkbar wäre auch die Zwischenschaltung einer Getriebeanordnung zwischen Abtriebswelle 10 und Schwenkhebel 7, um die Verschwenkung der Schwenkhebel 7 um typischerweise ca. 90° zu bewirken. Bevorzugt ist eine Steuerung 11 für die Antriebe 9 mit einer Sensoranordnung 12 in Wirkverbindung. Diese Sensoranordnung 12 bestimmt die Geschwindigkeit des Fahrzeuges und/oder das auf den Träger 6v, 6h wirkende Gewicht und gibt einen entsprechendes Signal an die Steuerung 11 weiter, welche vorzugsweise derart ausgelegt ist, dass im Fall der Überschreitung eines Grenzwertes für entweder die Geschwindigkeit und/oder das auf die Dachträgeranordnung einwirkende Gewicht die Antriebe 9 blockiert und somit keine manuelle Betätigung mittels des typischerweise am Armaturenbrett oder auch im Gepäckbereich des Fahrzeuges angeordnete Bedienungselement 13 für die Dachträgeranordnung mehr möglich ist. Der Gewichtssensor ist dabei vorzugsweise zwischen dem Hart-PVC und der Aluminiumquerstange des Trägers 6v, 6h eingesetzt.

Während für einen Träger mit rundem Querschnitt eine fixe Anbringung an den Schwenkhebeln 7 ausreicht, muss für Träger 6v, 6h in Form eines flachen, im Wesentlichen rechteckigen Profils die Verbindung zwischen Schwenkhebeln 7 und Träger 6v, 6h eine Bewegbarkeit gewährleisten, um das Profil immer in der gleichen räumlichen Orientierung in Bezug auf das Fahrzeugdach bzw. die Fahrtrichtung zu halten. Dies kann über herkömmliche Kinematik-Anordnungen, Drehantriebe, etc. erreicht werden. Typische Masse für die Abmessungen der Träger sind eine Länge von knapp der Breite des Autodaches (je nach Modell), bei einer Dicke von ca. 2 cm (inkl. Beschichtung) und einer Breite von ca. 7 cm.

Eine weitere optionale Ergänzung ist eine Dachheizung, zumindest entlang des Randes der Ausnehmung 14 in der Dachplatte 5d für die Träger 6v, 6h, welche die Nutzung auch bei Frost gewährleistet. Diese Heizung wird parallel mit der Aluminiumquerstange verlegt und befindet sich unter der Hart-PVC Dichtung, welche sich unter der Aluminiumquerstange im eingefahrenen Zustand befindet.

### Bezugszeichenaufstellung

- 1: Rahmen
- 2v: vordere Querstrebe
- 2h: hintere Querstrebe
- 3l: linke Längsstrebe
- 3r: rechte Längsstrebe
- 4: Dachbereich
- 5v: vorderer Kotflügel
- 5h: hinterer Kotflügel
- 5d: Dachplatte
- 6v: vorderer Querträger
- 6h: hinterer Querträger
- 7: Schwenkhebel
- 8v: vordere Schwenkachse
- 8h: hintere Schwenkachse
- 9: Antrieb
- 10: Abtriebswelle
- 11: Steuerung
- 12: Sensoranordnung
- 13: Bedienelement
- 14: Ausnehmung

## Patentansprüche

1. Tragende Baugruppe (1) eines Fahrzeuges, insbesondere Rahmen oder selbsttragende Karosserie eines Kraftfahrzeuges, umfassend auf Biegung und/oder Schub belastete Bauteile, wobei zumindest zwei dieser Bauteile (2v, 2h, 3r, 3l) im Dachbereich (4) verlaufen, **dadurch gekennzeichnet, dass** zwei Träger (6v, 6h) einer Dachträgeranordnung an Schwenkhebeln (7) befestigt sind, welche um jeweils eine im Wesentlichen in der Ebene des Fahrzeugdaches liegende Achse (8v, 8h) verschwenkbar sind, wobei die Anlenkpunkte der Schwenkhebel (7) jeweils eines dieser Träger am Bauteil (2v, 2h, 3r, 3l) des Dachbereiches (4) in Längsrichtung oder in Querrichtung des Fahrzeuges hintereinanderliegen und mit einem reversierbaren, ansteuerbaren Antrieb (9) in Wirkverbindung stehen.

2. Baugruppe nach Anspruch 1, **dadurch gekennzeichnet, dass** der Antrieb (9) ebenfalls an einem Bauteil (2v, 2h, 3r, 3l) des Dachbereiches (4) angebracht ist.

3. Baugruppe nach Anspruch 1 oder 2, **dadurch gekennzeichnet, dass** die Schwenkhebel (7) antriebsmässig mit der Abtriebswelle (10) eines Elektromotors gekoppelt sind, vorzugsweise direkt mit dieser Welle drehfest verbunden sind.

4. Baugruppe nach einem der Ansprüche 1 bis 3, **dadurch gekennzeichnet, dass** die Steuerung (11) der Antriebe (9) mit einer Sensoranordnung (11) in Wirkverbindung steht und derart ausgelegt ist, dass im Fall der die Überschreitung eines Grenzwertes für die Geschwindigkeit und/oder das auf die Träger (6v, 6h) der Dachträgeranordnung einwirkende Gewicht die Antriebe (9) blockiert sind.

5. Baugruppe nach einem der Ansprüche 1 bis 4, **dadurch gekennzeichnet, dass** Querträger (6v, 6h) der Dachträgeranordnung an zwei auf gegenüberliegenden Fahrzeugseiten und in Längsrichtung des Fahrzeuges verlaufenden Bauteilen (3r, 3l) der Baugruppe (1) befestigt sind.

6. Baugruppe nach einem der Ansprüche 1 bis 4, **dadurch gekennzeichnet, dass** Längsschienen der Dachträgeranordnung an zwei in Bezug auf die Fahrzeuglängsachse hintereinanderliegenden und in Querrichtung des Fahrzeuges verlaufenden Bauteilen der Baugruppe befestigt sind.

7. Fahrzeugkarosserie, bestehend aus einer tragenden Baugruppe (1) nach einem der Ansprüche 1 bis 6 und einer zumindest teilweise davon gebildeten oder daran befestigten Beplankung (5v, 5h, 5d), welche eine äussere Oberfläche bildet, **dadurch gekennzeichnet, dass** die Beplankung (5d) des Dachbereiches (4) Ausnehmungen (14) zur Aufnahme zumindest der Träger (6v, 6h) der Dachträgeranordnung aufweist und die Träger (6v, 6h) derart geformt sind, dass deren Oberseite den Ausnehmungen (14) korrespondierend geformt ist.
